# EUROPÄISCHE PATENTSCHRIFT

(11) **EP 3 245 128 B1**
(45) Veröffentlichungstag und Bekanntmachung des Hinweises auf die Patenterteilung: **15.05.2019**
(21) Anmeldenummer: 16700698.0
(22) Anmeldetag: 12.01.2016
(51) Int. Cl.: B63H 23/34, F16C 3/02

(54) **SCHWIMM- UND TAUCHHILFE**
SWIMMING AND DIVING AID
AIDE À LA NAGE ET À LA PLONGÉE

(30) Priorität: 14.01.2015 DE 102015100499
(43) Veröffentlichungstag der Anmeldung: 22.11.2017
(73) Patentinhaber: CAYAGO TEC GmbH, 32108 Bad Salzuflen (DE)
(72) Erfinder: WALPURGIS, Hans-Peter, 6370 Kitzbühel (AT)
(74) Vertreter: Herrmann, Jochen
(86) Internationale Anmeldenummer: PCT/EP2016/050483
(87) Internationale Veröffentlichungsnummer: WO 2016/113263

(56) Entgegenhaltungen:
- EP-A2- 0 361 639
- WO-A1-2005/054694
- DE-A1-102004 049 615
- DE-A1-102013 100 544
- GB-A- 2 406 154

## Beschreibung

Die Erfindung betrifft eine Schwimm- und Tauchhilfe mit einem Motor und einer Motorwelle zur Übertragung einer Antriebskraft von dem Motor zu einem Propeller des Wasserfahrzeugs.

Derartige Schwimm- und Tauchhilfe sind aus der DE 10 2004 049 615 B4 bekannt. Sie weisen eine Griffanordnung auf, an der sich ein Benutzer festhalten kann, während er mit einem Teilbereich seines Oberkörpers oberseitig auf dem Rumpf des Wasserfahrzeuges aufliegt. Innerhalb des Rumpfes ist ein Strömungskanal angeordnet, in dem ein Propeller untergebracht ist. Der Propeller wird von einem Elektromotor angetrieben, der über Akkumulatoren mit Strom versorgt wird. Dazu ist der Propeller über eine Antriebswelle mit dem Elektromotor verbunden. Der Elektromotor ist in einem Aufnahmegehäuse, welches bis zum Propeller geführt ist, gehalten. Die Antriebswelle ist über eine Dichtkassette aus dem Aufnahmegehäuse zu dem Propeller geführt. Das somit wasserdicht ausgeführte Aufnahmegehäuse mit dem Elektromotor kann in einem von Wasser umfluteten Raum im Rumpf der Schwimm- und Tauchhilfe angeordnet sein und so seine Verlustwärme an das vorbeiströmende Wasser abgeben. Dazu ist es vorgesehen, dass der Propeller, der Elektromotor und ein zugehöriges Steuergerät als Unterwasser-Antriebs-Einheit ausgebildet und in dem Strömungskanal angeordnet sind.

Bei einer solchen Anordnung stehen den Vorteilen der kompakten Bauweise und dem durch die Kühlung erreichten guten Wirkungsgrad der Nachteil entgegen, dass der Elektromotor in dem Strömungskanal angeordnet ist und damit die Strömung des Wassers nicht unerheblich beeinflusst. Der Strömungskanal muss daher ausreichend groß dimensioniert werden, um die Abschattung, die durch den Elektromotor bewirkt wird, zu kompensieren. Hierdurch wird die Baugröße der Schwimm- und Tauchhilfe beeinflusst.

In der DE 10 2013 100 544 A1 ist daher ein Wasserfahrzeug vorgeschlagen, bei dem ein Propeller in einem Strömungskanal angeordnet ist. In einem Rumpf des Wasserfahrzeugs ist ein Flutungsraum vorgesehen, der im Schwimm- und Tauchbetrieb über Wasserdurchtrittsöffnungen mit Wasser gefüllt wird. Der Elektromotor und zugehörige Akkumulatoren sind in dem Flutungsraum angeordnet und werden so effizient gekühlt, ohne die Strömung in dem Strömungskanal zu beeinträchtigen. Die Energieübertragung von dem Elektromotor zu dem Propeller erfolgt über eine in einem Hüllrohr geführte Antriebswelle, welche aus dem Flutungsraum in den Strömungskanal geführt ist. Der Elektromotor ist somit aus dem Strömungsbereich des Strömungskanals herausgenommen, wird aber dennoch durch den wärmeleitenden Kontakt zu dem Wasser in dem Flutungsraum gekühlt.

Nachteilig bei dieser Anordnung ist die Gewichtszunahme des Wasserfahrzeugs durch die erforderliche, verlängerte Antriebswelle, was insbesondere den Transport des Sportgeräts außerhalb des Wassers stark beeinträchtig. Die erhöhte Massenträgheit der Antriebswelle beeinflusst die Dynamik des Antriebs, was durch einen entsprechend leistungsstärkeren Elektromotor unter dem Nachteil eines erhöhten Energieverbrauchs ausgeglichen werden muss. Ein weiterer Nachteil entsteht durch die ungenügende Steifigkeit der aus Metall gefertigten Antriebswelle. Sie muss daher entsprechend stark und damit schwer ausgeführt werden. Weiterhin führt die geringe Steifigkeit zu Schwingungen der Antriebswelle. Diese übertragen sich auf das gesamte Wasserfahrzeug und beeinträchtigen damit den Fahrkomfort.

Aus der DE 601 22 137 T2 ist ein Antriebssystem für Schiffe bekannt, welches an den Rumpf eines Schiffes montiert werden kann. Das Antriebssystem ist in Form einer Wasserdüse mit einem in einem Gehäuse angeordneten Flügelrad ausgeführt. Der Antrieb des Flügelrades erfolgt über eine Welle. Das Wasser strömt über eine Einlassöffnung mit einem Durchmesser größer 0,5m zu dem Flügelrad. Das Antriebssystem ist für eine Leistung in einem Bereich von 3 bis 30MW vorgesehen. Um den Wirkungsgrad des Antriebssystems zu verbessern und um Gewicht einzusparen ist es vorgesehen, eine Antriebswelle aus einem leichtgewichtigen Komposit-Material, welches Kohlenstofffasern enthält, zu verwenden.

Solche Antriebssysteme mit einer erforderlichen Einlassöffnung größer als 0,5m und einer Leistung über 3MW sind für den Einsatz in Wassersportfahrzeugen nicht konzipiert und auch nicht geeignet.

Es ist Aufgabe der Erfindung, eine Schwimm- und Tauchhilfe bereitzustellen, welche bei einer hohen Fahrdynamik ein geringes Eigengewicht aufweist.

Die Aufgabe der Erfindung wird durch die Merkmale des Anspruchs 1 gelöst.

Kohlenstofffaserverstärkte Kunststoffe weisen gegenüber bekannten Motorwellen aus Metall eine deutlich geringere Dichte bei einer gleichzeitig sehr hohen Steifigkeit auf. Daher kann zur Übertragung einer vorgesehenen Antriebsleistung von dem Motor auf den Propeller eine leichtere Motorwelle verwendet werden. Die Schwimm- und Tauchhilfe kann so außerhalb des Wassers leichter getragen werden. Die durch die geringere Masse bewirkte geringere Trägheit der Motorwelle führt zu einer erhöhten Dynamik der Schwimm- und Tauchhilfe bei gleicher, von dem Motor bereitgestellter Leistung, was für den Einsatz der Schwimm- und Tauchhilfe als Wassersportgerät einen wesentlichen Vorteil darstellt. Dies gilt insbesondere, da die installierbare Leistung des verwendeten Motors und die Speicherfähigkeit des zugehörigen Energiespeichers bei einem tragbaren Wassersportgerät eng begrenzt sind.

Eine weitere Gewichtsreduzierung ohne wesentliche Stabilitätsverluste und Steifigkeitsverluste kann dadurch erreicht werden, dass die Motorwelle als Hohlwelle ausgeführt ist.

Eine Erhöhung der Steifigkeit der Motorwelle kann dadurch erreicht werden, dass die Motorwelle in radialer Abfolge zumindest zwei Schichten aus kohlenstofffaserverstärktem Kunststoff aufweist und/oder dass die Kohlenstofffasern einer der Schichten, insbesondere der weiter außen liegenden Schicht, im Wesentlichen in Richtung der Längserstreckung der Motorwelle ausgerichtet sind, und/oder dass die Kohlenstofffasern einer der Schichten, insbesondere der weiter außen liegenden Schicht, im Wesentlichen quer zur Richtung der Längserstreckung der Motorwelle ausgerichtet sind. Dabei bewirken in Richtung der Längserstreckung ausgerichtete Kohlenstofffasern eine Erhöhung der Zug- und Biegesteifigkeit der Antriebswelle, während durch quer zur Richtung der Längserstreckung ausgerichtete Kohlenstofffasern eine Erhöhung der Torsionssteifigkeit der Antriebswelle erreicht wird. Vorzugsweise werden zur Erhöhung der Steifigkeit hochmodulige Kohlenstofffasern mit einem Elastizitätsmodul von möglichst größer 400.000 N/mm² eingesetzt. Weiterhin kann durch geeignete Ausrichtung der Kohlenstofffasern das Ausdehungsverhalten der Motorwelle an das Ausdehnungsverhalten benachbarter Bauteile angepasst werden.

Um zu vermeiden, dass Kohlenstofffasern nach außen treten, kann es vorgesehen sein, dass auf zumindest einem Teil der Oberfläche der Motorwelle eine Kunststoffschicht ohne Kohlenstofffaseranteil angeordnet ist. Die Kunststoffschicht dient auch als Schutzschicht gegen mechanische Verletzungen der Kohlenstofffasern sowie gegenüber auf die Motorwelle einwirkenden Medien, beispielsweise gegenüber Salzwasser.

Zur Vermeidung oder zumindest Reduzierung von Kerbspannungen, wie sie beispielsweise an Rissenden von makroskopischen oder mikroskopischen Rissen an der Oberfläche des kohlenstofffaserverstärkten Kunststoffes auftreten können, kann es vorgesehen sein, dass zumindest ein Abschnitt der Motorwelle eine durch ein Drehverfahren oder ein Schleifverfahren oder ein Polierverfahren hergestellte Oberfläche aufweist. Durch die genannten Nachbearbeitungsschritte kann weiterhin eine sehr genaue, rotationssymmetrische zylindrische Struktur der Motorwelle erreicht werden, was zu einem gut ausgewuchteten Rundlauf der Motorwelle führt. Weiterhin lassen sich damit passgenaue Ankoppelstellen zur Anbringung von Lagern herstellen.

Um weitere Bauelemente mit der Motorwelle durch Kleben verbinden zu können kann es vorgesehen sein, dass die Motorwelle zumindest einen Fügebereich aufweist und dass in dem Fügebereich Klebefugen in Form von in die Oberfläche der Motorwelle eingebrachten Eintiefungen vorgesehen sind. Kleben ermöglicht die stoffschlüssige Verbindung zwischen der Motorwelle und erforderlichen Montage- und Lagerelementen. Durch die als Eintiefungen vorgesehenen Klebefugen wird ein definierter Klebespalt mit einer definierten, gleichmäßigen Dicke der Klebstoffschicht eingestellt. Dadurch wird eine belastbare Klebeverbindung sichergestellt.

Entsprechend einer besonders bevorzugten Ausgestaltungsvariante der Erfindung kann es vorgesehen sein, dass die Motorwelle zumindest zwei Lagerbereiche aufweist und/oder dass die Lagerbereiche in einem dem Motor zugewandten Endbereich und einem dem Propeller zugewandten Endbereich der Motorwelle angeordnet sind. Durch die beidseitige Lagerung der Motorwelle wird ein Verbiegen der Motorwelle bei auftretenden Querkräften vermieden werden. Durch die Maßnahme der beidseitigen Lagerung können somit aus kohlenstofffaserverstärktem Kunststoff hergestellte Motorwellen mit einem vergleichsweise geringen Durchmesser hergestellt und verwendet werden.

Die Lagerung der Motorwelle kann derart erfolgen, dass zumindest ein Lagerbereich im Bereich der aus kohlefaserverstärktem Kunststoff bestehenden Längserstreckung der Motorwelle angeordnet ist und/oder dass zumindest ein Lagerbereich an einer endseitig an die Motorwelle angebrachten Verlängerung angeordnet ist. Eine Verlängerung ist dabei vorteilhaft axial an den kohlenstofffaserverstärkten Kunststoff der Motorwelle angebracht und rotationssymmetrisch zu der Mittellängsachse der Motorwelle ausgeführt.

Die Druckbelastbarkeit von kohlenstofffaserverstärkten Kunststoffen ist geringer als die von Stahl. Um dennoch hohe Kräfte auf die Motorwelle übertragen zu können, ohne diese zu beschädigen, kann es vorgesehen sein, dass in Bereichen, in denen äußere Kräfte auf die Motorwelle übertragen werden, Kraft-Übertragungselemente aus Metall angeordnet sind und/oder dass die Kraft-Übertragungselemente mit der Motorwelle verbunden sind, insbesondere dass die Kraft-Übertragungselemente mit der Motorwelle verklebt sind. Die zu übertragenden oder abzufangenden Kräfte werden durch die Verstärkungselemente auf eine größere Fläche der Motorwelle übertragen. Dadurch wird die Flächenpressung reduziert.

Während des Betriebs der Schwimm- und Tauchhilfe werden in den Bereichen, in denen die Motorwelle gelagert ist, permanent Kräfte auf diese übertragen. Weiterhin können Relativbewegungen zwischen der Motorwelle und einem vorgesehenen Lager auftreten, was zu einem Abrieb des kohlenstofffaserverstärkten Kunststoffs führt. Um die einwirkenden Kräfte auf eine große Fläche zu verteilen und einen verstärkten Abrieb der Motorwelle zu vermeiden kann es vorgesehen sein, dass in zumindest einem Lagerbereich der Motorwelle, in dem die Motorwelle um ihre Mittellängsachse drehbar lagerbar ist, umlaufend zu der Motorwelle ein Kraft-Übertragungselement aus Metall angeordnet ist und/oder dass das Kraft-Übertragungselement mit der Motorwelle verbunden ist, insbesondere dass das Kraft-Übertragungselement mit der Motorwelle verklebt ist. Durch die feste Verbindung bzw. die Klebung werden Relativbewegungen zwischen dem Kraft-Übertragungselement und der Motorwelle und somit ein Abrieb der Motorwelle vermieden.

Eine sichere Montage des Propellers kann dadurch erreicht werden, dass die Motorwelle ein Kraft-Übertragungselement zur Aufnahme des Propellers aufweist und/oder dass das Kraft-Übertragungselement zur Aufnahme des Propellers endseitig an die Motorwelle angebracht ist. Das aus Metall gefertigte Kraft-Übertragungselement ermöglicht eine hohe Kraftübertragung auf den Propeller und damit schnell wechselnde Belastungen, beispielsweise während Beschleunigungsphasen der Schwimm- und Tauchhilfe. Der Propeller kann zum Beispiel durch eine Montageschraube schnell und einfach wechselbar mit dem Kraft-Übertragungselement verbunden werden.

Entsprechend einer Erfindungsvariante kann eine sichere Befestigung des Propellers an der Motorwelle dadurch erreicht werden, dass ein Wellenstumpf als Kraft-Übertragungselement mit einem Befestigungsabschnitt in einer endseitig und axial verlaufend in die Motorwelle eingebrachten Wellenstumpfaufnahme festgelegt ist und dass der Wellenstumpf einen Befestigungsabschnitt zur Befestigung des Propellers aufweist und/oder dass der Wellenstumpf einen Lager- und Abdichtbereich zur Lagerung der Motorwelle und/oder zur Abdichtung aufweist. Der Wellenstumpf kann somit mehrere Aufgaben, nämlich die Befestigung des Propellers, die Aufnahme eines Lagers sowie die Abdichtung beispielsweise eines Bereichs, in dem das Lager angeordnet ist, erfüllen. Dabei erfolgt die Lagerung der Motorwelle weit in ihrem dem Propeller zugewandten Endbereich, wodurch ein Verbiegen der Motorwelle bei über den Propeller einwirkenden Querkräften sicher vermieden werden kann.

Die Kraftübertragung von einem Motor, der die Schwimm- und Tauchhilfe antreibt, auf die Motorwelle wird dadurch erreicht, dass der Rotor des Elektromotors mit der Motorwelle verklebt ist. Der Rotor des Elektromotors ist dadurch fest mit der Motorwelle verbunden, ohne dass Kohlenstofffasern des kohlenstofffaserverstärkten Kunststoffs zur Aufnahme zusätzlicher Befestigungselemente zerstört werden müssen. Die Festigkeit und Belastbarkeit der Motorwelle bleibt somit erhalten. Die Motorwelle mit dem angeklebten Rotor kann einfach in ein Motorgehäuse des Elektromotors, in dem der zugehörige Stator angeordnet ist, eingebracht werden. Dies ermöglicht eine einfache Montage der Schwimm- und Tauchhilfe. Ein weiterer Vorteil ergibt sich aus dem geringen zusätzlichen Gewicht der Motorwelle durch den erforderlichen Klebstoff zur Herstellung der Verbindung zwischen dem Rotor und der Motorwelle mit den genannten Vorteilen einer leichten Motorwelle.

Um die Motorwelle auszuwuchten und damit einen exakten Rundlauf der Motorwelle zu erreichen kann es vorgesehen sein, dass zumindest eine Wuchtscheibe aus Metall mit einer axialen Bohrung auf die Motorwelle aufgesteckt und mit dieser verbunden, insbesondere verklebt, ist. Die Motorwelle kann durch radial in die Wuchtscheibe eingebrachte Bohrungen ausgewuchtet werden. Die Wuchtscheibe ist vorzugsweise aus Metall, insbesondere aus Aluminium, gefertigt.

Dabei kann es vorteilhaft vorgesehen sein, dass an der Wuchtscheibe ein Lagersitz angeformt ist. Der Lagersitz deckt einen Lagerbereich der Motorwelle ab. Ein Lager, mit welchem die Motorwelle gelagert ist, kann auf dem Lagersitz montiert werden. Der Lagersitz bildet somit ein Kraft-Übertragungselement. Durch das kombinierte Bauteil können sowohl die von dem Lager als auch von der Wuchtscheibe auf die Motorwelle eingebrachten Kräfte auf eine große Fläche verteilt werden, wodurch die Flächenpressung der Motorwelle reduziert wird. Die kombinierte Bauform verringert weiterhin die Herstellkosten gegenüber einer getrennten Ausführung der Wuchtscheibe und des Kraft-Übertragungselements im Lagerbereich.

Der Rundlauf der Motorwelle kann dadurch verbessert werden, dass an einem äußeren Ende der Motorwelle oder an einem äußeren Ende einer Verlängerung der Motorwelle ein Scheibenmagnet derart angebracht ist, dass seine Mittellängsachse auf der Mittellängsachse der Motorwelle liegt. Der Scheibenmagnet dient als Geber für einen Rotorlagesensor.

Die Erfindung wird im Folgenden anhand eines in den Zeichnungen dargestellten Ausführungsbeispiels näher erläutert. Es zeigen:
- Fig. 1: in perspektivischer Seitenansicht von hinten eine Schwimm- und Tauchhilfe,
- Fig. 2: einen Teil einer Unterwasser-Antriebs-Einheit mit einem Elektromotor,
- Fig. 3: den in Figur 2 gezeigten Teil der Unterwasser-Antriebs-Einheit in einer Schnittdarstellung,
- Fig. 4: den in Figur 3 gezeigten Elektromotor in einer vergrößerten Schnittdarstellung,
- Fig. 5: einen in Figur 3 gezeigten Propellerabschnitt in einer vergrößerten Schnittdarstellung,
- Fig. 6: die in Figur 1 gezeigte Schwimm- und Tauchhilfe in einer seitlichen Schnittdarstellung,
- Fig. 7: einen in Figur 6 gezeigten Ausschnitt der Schwimm- und Tauchhilfe im Bereich des Elektromotors und
- Fig. 8: einen in Figur 6 gezeigten Ausschnitt der Schwimm- und Tauchhilfe im Bereich ihres Hecks.

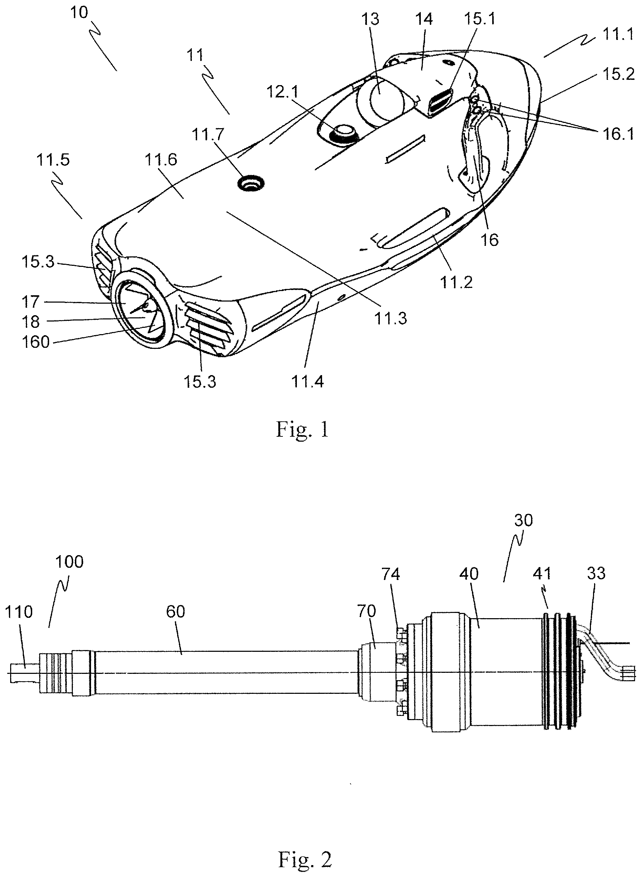

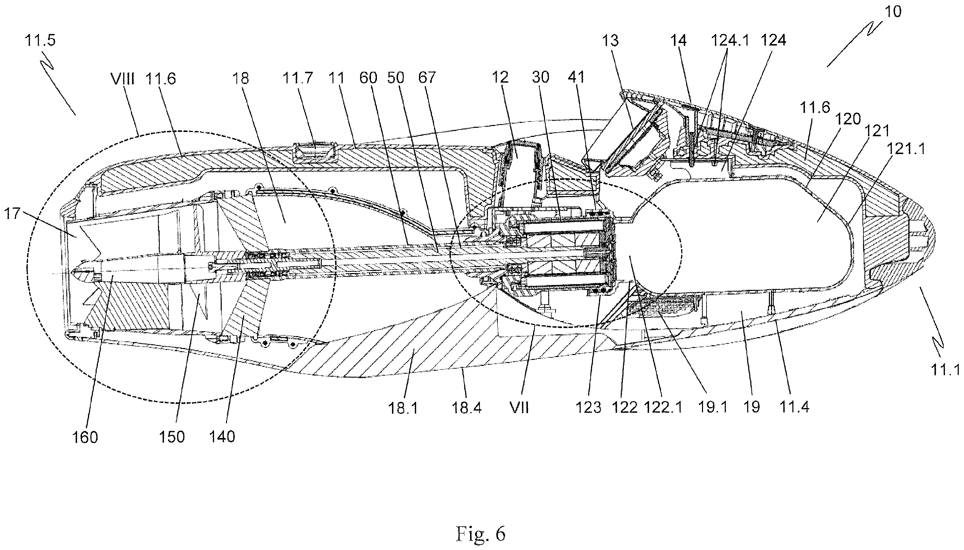

Figur 1 zeigt in perspektivischer Seitenansicht von hinten eine Schwimm- und Tauchhilfe 10. Die Schwimm- und Tauchhilfe 10 weist einen Rumpf 11 auf. Der Rumpf 10 ist aus einem Oberteil 11.6 und einem Unterteil 11.4 zusammengesetzt. Das Oberteil 11.6 ist mit zwei Haltegriffen 16 ausgerüstet, die beidseitig des Rumpfes 11 angeordnet sind. An diesen Haltegriffen 16 kann sich ein Benutzer festhalten und die Schwimm- und Tauchhilfe 10 mit an den Haltegriffen 16 angebrachten Bedienelementen 16.1 steuern. Insbesondere kann hier die Motorleistung der Schwimm- und Tauchhilfe 10 variiert werden. Der Benutzer, der sich an den Haltegriffen 16 festhält, liegt mit seinem Oberkörper auf einer Auflagefläche 11.3 im Bereich hinter einem Display 13 auf dem Oberteil 11.6 auf. An der Auflagefläche 11.3 ist eine Halterung 11.7 zur Befestigung eines Gurtsystems angebracht, mit dem sich der Benutzer an der Schwimm- und Tauchhilfe 10 angurten kann. Vor der Auflagefläche 11.3 ist ein Verschluss 12.1 für eine dahinter liegende, in Figur 6 gezeigte Ladebuchse 12 angeordnet. Über die Ladebuchse 12 können in dem Rumpf 11 enthaltene Akkumulatoren aufgeladen werden.

Seitlich am Rumpf 11 sind Tragegriffe 11.2 angeordnet, an denen die Schwimm- und Tauchhilfe 10 außerhalb des Wassers getragen werden kann.

In Fahrtrichtung vor dem Display 13 und zwischen den beiden Haltegriffen 16 ist eine abnehmbare Abdeckhaube 14 an dem Rumpf 11 befestigt. Die Abdeckhaube 14 überdeckt einen nicht gezeigten Montagebereich der Schwimm- und Tauchhilfe 10. Seitlich sind Entlüftungsöffnungen 15.1 in der Abdeckhaube 15 vorgesehen, welche mit einem in dem Rumpf 11 vorgesehenen und in Figur 6 gezeigten Flutungsraum 19 verbunden sind.

Im Bereich des Bugs 11.1 sind Wassereintrittsöffnungen 15.2 vorgesehen, durch welche Wasser in den Flutungsraum 19 einströmen kann. Der Flutungsraum 19 kann dazu über die Entlüftungsöffnungen 15.1 der Abdeckhaube 14 entlüftet werden. Durch den mit Wasser gefüllten Flutungsraum 19 wird der Auftrieb der Schwimm- und Tauchhilfe 10 so eingestellt, dass eine vorgegebene Auftriebskraft erhalten bleibt, so dass sowohl ein Schwimm- wie auch ein Tauchbetrieb möglich ist. An dem Heck 11.5 der Schwimm- und Tauchhilfe 10 sind durch Lamellen abgedeckte Wasseraustrittsöffnungen 15.3 angebracht, die ebenfalls mit dem Flutungsraum 19 in Verbindung stehen. Der Flutungsraum 19 wird, sobald die Schwimm- und Tauchhilfe 10 in das Wasser gesetzt wird, mit Wasser geflutet, das durch die Wassereintrittsöffnungen 15.2 und Wasseraustrittsöffnungen 15.3 eindringt. Sobald die Schwimm- und Tauchhilfe 10 in den Fahrbetrieb übergeht, wird in dem Flutungsraum 19 eine Strömung erzeugt. Dabei tritt das Wasser durch die Wassereintrittsöffnungen 15.2 in den Flutungsraum 19 ein. Es durchströmt den Flutungsraum 19 und umspült dabei in dem Flutungsraum 19 gehaltene elektrische Baueinheiten, wie beispielsweise einen in Figur 2 gezeigten Elektromotor 30 zum Antrieb der Schwimm- und Tauchhilfe 10 oder die zugehörigen Akkumulatoren. Dabei nimmt das Wasser die Verlustleistung der elektrischen Baueinheiten auf und kühlt diese. Nach Durchströmen des Flutungsraums 19 verlässt das Wasser diesen durch die Wasseraustrittsöffnungen 15.3, die symmetrisch beidseitig eines Strahlaustritts 17 eines Strömungskanals 18 angeordnet sind. In dem Strömungskanal 18 ist endseitig ein Stator 160 angeordnet, welcher einer Rotation des durch den Strömungskanal 18 strömenden Wassers entgegenwirkt, so dass das Wasser aus dem Strömungskanal 18 möglichst rotationsfrei ausströmt. Die Rotationsenergie des Wassers wird dabei in eine lineare Bewegungsenergie umgewandelt und dient damit dem Antrieb der Schwimm- und Tauchhilfe 10.

Figur 2 zeigt einen Teil einer Unterwasser-Antriebs-Einheit der Schwimm- und Tauchhilfe 10 mit einem Elektromotor 30.

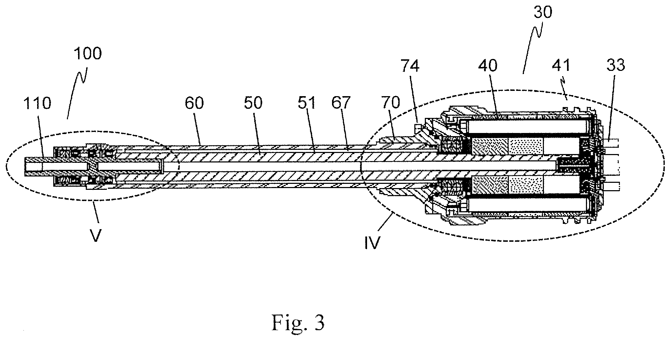

Der Elektromotor 30 ist von einem Motorgehäuse 40 umgeben, welches endseitig einen Anschlussbereich 41 aufweist. Auf der Seite des Anschlussbereichs 41 sind Anschlusskabel 33 aus dem Motorgehäuse 40 geführt. Gegenüberliegend zum Anschlussbereich 41 ist ein Formadapter 70 mittels Zylinderkopfschrauben 74 mit dem Motorgehäuse 40 verbunden. In dem Formadapter 70 ist ein Außenrohr 40 aufgenommen, welches eine in Figur 3 gezeigte Motorwelle 50 umschließt. Auf der dem Elektromotor 30 gegenüberliegenden Seite endet das Außenrohr 60 in einem Propellerabschnitt 100, in dem ein Wellenstumpf 110 angeordnet ist.

Der Wellenstumpf 110 dient der Montage eines in Figur 6 gezeigten Propellers 150 zum Antrieb der Schwimm- und Tauchhilfe 10. An dem Anschlussbereich 41 des Elektromotors 30 kann ein ebenfalls in Figur 6 dargestelltes Elektronikgehäuse 120 angeschlossen werden, welches ein nicht dargestelltes Steuergerät zur Ansteuerung des Elektromotors 30 aufweist. Das Motorgehäuse 40 bildet zusammen mit dem Formadapter 70, dem Außenrohr 60 und dem angeschlossenen Elektronikgehäuse 120 eine wasserdichte Baueinheit, welche mit Hilfe der Zylinderkopfschrauben 74 innerhalb wasserdurchfluteter Bereiche des Rumpfes 11 der Schwimm- und Tauchhilfe 10 befestigt werden kann.

Figur 3 zeigt den in Figur 2 gezeigten Teil der Unterwasser-Antriebs-Einheit in einer Schnittdarstellung. Gleiche Bauteile sind dabei wie zu Figur 2 eingeführt bezeichnet.

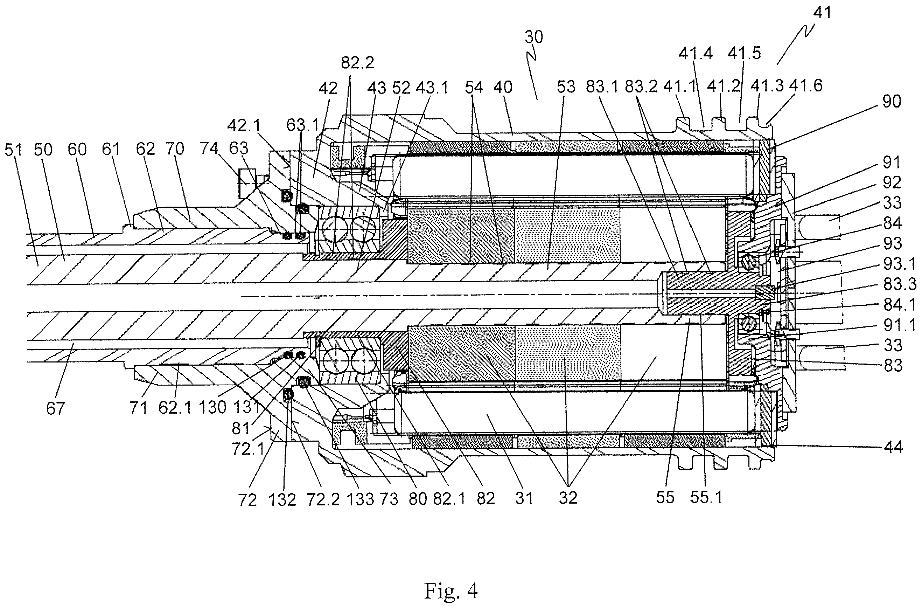

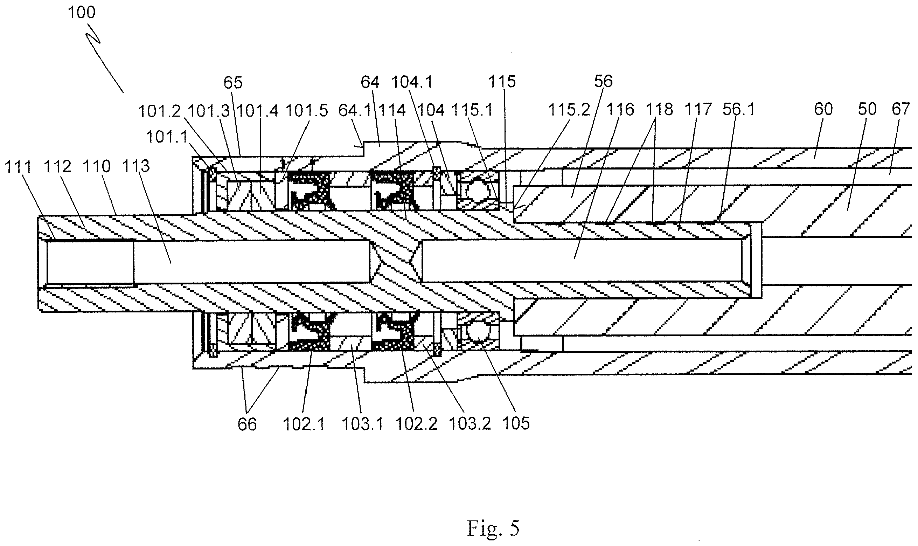

Innerhalb des Außenrohres 60 ist die Antriebswelle 50 aufgenommen. Dabei ist insbesondere ein Mittelabschnitt 51 der Antriebswelle 50 innerhalb des Außenrohres 60 angeordnet. Ein Rotor 32 ist an einem Rotorabschnitt 53 der Motorwelle 50 befestigt, wie dies näher in Figur 4, welche den in Figur 3 mit IV gekennzeichneten Ausschnitt darstellt, gezeigt ist. Gegenüberliegend ist der Wellenstumpf 110 an einem zweiten Aufnahmeabschnitt 56 der Motorwelle 50 befestigt. Ein zugehöriger Ausschnitt V der Darstellung ist vergrößert in Figur 5 gezeigt.

Die Motorwelle 50 ist aus einem kohlenstofffaserverstärkten Kunststoff (CFK) hergestellt. Sie überträgt die von dem Elektromotor 30 erzeugte Antriebskraft auf den Wellenstumpf 110 und den an dem Wellenstumpf 110 montierten, in Figur 6 gezeigten Propeller 150.

CFK bietet gegenüber herkömmlich zur Herstellung von Motorwellen 50 verwendeten Materialien, wie beispielsweise Stahl, den Vorteil eines deutlich reduzierten Gewichts bei gleichzeitig sehr hoher Steifigkeit. Dies ist für die dargestellte Schwimm- und Tauchhilfe 10 von sehr großer Bedeutung, da diese außerhalb des Wassers möglichst leicht tragbar sein muss. Das Gewicht wird durch die Ausführung der Motorwelle 50 als Hohlwelle noch weiter reduziert, ohne die Belastbarkeit der Motorwelle 50 wesentlich zu verringern. Im Vergleich zu Stahl neigt eine aus CFK hergestellte Motorwelle 50 deutlich weniger zur Schwingungen, was zu einem verbesserten Rundlauf und zu einer geringeren Geräuschentwicklung führt. Weiterhin führen das geringere Gewicht und die reduzierte Schwingung zu einer Reduzierung der Belastung der Lager, mit welchen die Motorwelle 50 um ihre Mittellängsachse drehbar gelagert ist, wodurch der Verschleiß der Lager reduziert und damit deren Standzeit erhöht wird. Die träge Masse der Motorwelle 50 aus CFK ist gegenüber einer Motorwelle 50 aus Stahl deutlich reduziert, wodurch sich eine höhere Dynamik bei gewünschten Änderungen der Drehzahl der Motorwelle 50 und damit des Propellers 150 ergibt. Gleichzeitig sinkt der Energieverbrauch zum Beschleunigen der Motorwelle 50 mit dem Propeller 150, was zu einer Verlängerung der Betriebsdauer der durch Akkumulatoren mit Energie versorgen Schwimm- und Tauchhilfe 10 führt.

Um die Steifigkeit der Motorwelle 50 zu erhöhen ist sie mehrschichtig aufgebaut. Einer inneren Schicht, in der Kohlenstofffasermatten mit unterschiedlicher Orientierung der Kohlenstofffasern innerhalb der Kunststoffmatrix angeordnet sind, folgte eine Schicht mit ausgerichteten Kohlenstofffasern. Diese sind vorzugsweise als hochmodulige Kohlenstofffasern, welche in Faserrichtung einen sehr hohen E-Modul von beispielsweise >400.000N/mm² aufweisen, ausgeführt. Im vorliegenden Ausführungsbeispiel sind die hochmoduligen Kohlenstofffasern im Wesentlichen in Richtung der Längserstreckung der Motorwelle 50 ausgerichtet, um so die Zugfestigkeit und Biegesteifigkeit der Motorwelle 50 zu erhöhen. Alternativ oder zusätzlich dazu kann auch eine CFK-Schicht mit quer zur Längserstreckung der Motorwelle 50 angeordneten hochmoduligen Kohlenstofffasern vorgesehen sein. In dieser Anordnung erhöhen die zusätzlichen Kohlenstofffasern die Torsionssteifigkeit der Motorwelle 50.

Die Oberfläche der Motorwelle 50 ist bereichsweise überdreht, geschliffen oder poliert. Durch diese Nachbehandlungsschritte wird eine exakte rotationssymmetrische Kontur der Motorwelle 50 erhalten, was zu einem guten Rundlauf führt. Risse in der Oberfläche werden entfernt und damit Kerbspannungen, welche sich bei mechanischer Belastung an den Rissenden ausbilden, vermieden oder zumindest reduziert. Dadurch sinkt die Bruchwahrscheinlichkeit der Motorwelle 50 und ihre Belastbarkeit steigt. Um zu vermeiden, dass die Kohlenstofffasern bei der Nachbearbeitung verletzt werden, weist die Motorwelle außen eine abschließende Kunststoffschicht auf, welche keine Kohlenstofffasern enthält.

Zwischen der Motorwelle 50 und dem Außenrohr 60 ist ein abgedichteter Raum 67 ausgebildet, in den von außen kein Wasser eindringt. Dadurch werden die Reibung zwischen der Motorwelle 50 und Wasser und damit Energieverluste vermieden. Weiterhin ist die Motorwelle 50 keinen seitlich einwirkenden Querkräften von vorbeiströmendem Wasser ausgesetzt. Dadurch werden die Lager der Motorwelle 50 weniger belastet. Weiterhin wird die Motorwelle 50 nicht durch von vorbeiströmendem Wasser übertragenen Querkräften verbogen, was sich in einem verbesserten und schwingungsfreien Rundlauf der Motorwelle 50 auswirkt und wodurch der Propeller 150 in seiner Position innerhalb des Strömungskanals 18 gehalten ist.

Figur 4 zeigt den in Figur 3 gezeigten Elektromotor 30 in einer vergrößerten Schnittdarstellung.

Die Motorwelle 50 aus kohlenstofffaserverstärktem Kunststoff ist aus dem Außenrohr 60 heraus in das Innere des Motorgehäuses 40 geführt. Ihr Durchmesser reduziert sich stufenartig im Bereich des Übergangs in das Motorgehäuse 40. Auf einen dadurch gebildeten Festlagerbereich 52 der Motorwelle 50 ist eine vordere Wuchtscheibe 82 mit einem angeformten Lagersitz 82.1 so weit aufgeschoben, dass sie an der gebildeten Stufe der Motorwelle 50 anliegt. Die vordere Wuchtscheibe 82 und der Lagersitz 82.1 sind mit der Motorwelle 50 durch Kleben stoffschlüssig verbunden. Auf der Innenfläche des Lagersitzes 82.1 und der Wuchtscheibe 82 sind dazu Klebstoffeintiefungen 82.2 mit definierter Tiefe vorgesehen, in die der Klebstoff in einer durch die Klebstoffeintiefungen 82.2 vorgegebenen, optimierten Klebstoffdicke eingebracht ist.

Im Anschluss an den Festlagerbereich 52 ist der Durchmesser der Motorwelle 50 noch einmal stufenförmig verjüngt. Die Motorwelle 50 bildet hier ihren Rotorabschnitt 53 aus. Der Rotor 32 des Elektromotors 30 ist auf den Rotorabschnitt 53 aufgesteckt und mit diesem verklebt. Zur Ausbildung einer optimalen Klebstoffdicke sind in die Oberfläche des Rotorabschnitts 53 Klebefugen 54 eingebracht. Der Rotor 32 ist dreiteilig ausbildet, so dass der Elektromotor 30 durch Verändern der Anzahl der installierten Rotorteile in unterschiedlichen Leistungsstufen ausgeführt werden kann. Umlaufend zu dem Rotor 32 ist ein Stator 31 des Elektromotors 30 vorgesehen. Der Stator 31 ist mit einer Vergussmasse in dem Motorgehäuse 40 eingegossen und so thermisch mit dem Motorgehäuse 40 gekoppelt. Die Verlustwärme des Elektromotors 30 kann dadurch gut an das Motorgehäuse 40 abgegeben werden.

Endseitig weist die Motorwelle 50 einen ersten Aufnahmeabschnitt 55 auf, in dem eine Wuchtscheibenaufnahme 55.1 in Form einer axial angeordneten Bohrung eingebracht ist. Die Wuchtscheibenaufnahme 55.1 weist einen größeren Durchmesser als der innere Durchmesser der als Hohlwelle ausgeführten Motorwelle 50 auf. In der Wuchtscheibenaufnahme 55.1 ist eine hintere Wuchtscheibe 83 mit einem axial angeformten Zapfen 83.1 gehalten. Der Durchmesser des Zapfens 83.1 ist passgenau zu dem Durchmesser der Wuchtscheibenaufnahme 55.1 ausgelegt, so dass auch bei hohen Umdrehungen der Motorwelle 50 die hintere Wuchtscheibe 83 sicher geführt ist. Der Zapfen 83.1 ist in die Wuchtscheibenaufnahme 55.1 eingeklebt. Dazu weist der Zapfen 83.1 umlaufende Kleberillen 83.2 auf, welche die Ausbildung einer optimalen Klebstoffdicke bewirken. Auf der dem Zapfen 83.1 gegenüberliegenden Seite der hinteren Wuchtscheibe 83 ist ein axial angeordneter Lagerstutzen 83.3 angeformt.

Der Elektromotor 30 ist mit dem zylinderförmigen Motorgehäuse 40 eingehaust. Zu seinem dem Formadapter 70 zugewandten Ende knickt der äußere Mantel des Motorgehäuses 40 in einen radial zur Motorwelle 50 hin ausgerichteten Montagebereich 42 ab. Der Montagebereich 42 bildet eine Adapterauflage 42.1, an der der Formadapter 70 flächig anliegt. Der Montagebereich 42 geht in einen beabstandet zum Festlagerbereich 52 der Motorwelle 50 angeordneten, zum Innenraum des Motorgehäuses 40 hin ausgerichteten Lagerbereich 43 über. Der Lagerbereich 43 bildet eine zylindrische Innenfläche, die zu dem Lagersitz 82.1 der vorderen Wuchtscheibe 82 hin ausgerichtet ist. An seinem dem Innenraum des Motorgehäuses 40 zugewandten Ende weist der Lagerbereich 43 einen Vorsprung 43.1 auf, der radial zur vorderen Wuchtscheibe 82 hin ausgerichtet ist.

Der Formadapter 70 weist die zylindrisch ausgeführte Rohraufnahme 71 auf, in die das Außenrohr 60 bis zu einem an das Außenrohr 60 umlaufend angeformten Außensteg 61 eingeschoben ist. Das Außenrohr 60 ist somit mit einem Formadapter-Anschlussbereich 62 in der Rohraufnahme 71 des Formadapters 70 über einen sich axial erstreckenden Bereich gehalten, so dass auch stärkere auf das Außenrohr 60 einwirkende Querkräfte abgefangen werden können. Der Formadapter-Anschlussbereich 62 ist mit der Rohraufnahme 71 verklebt. Zur Ausbildung einer gleichmäßigen Klebstoffschicht in einer geeigneten Dicke sind umlaufend in die äußere Oberfläche des Formadapter-Anschlussbereichs 62 Klebekerben 62.1 angeordnet, in welchen der Klebstoff angesammelt ist. In Richtung zum Motorgehäuse 40 hin weitet sich der Formadapter 70 auf und bildet einen umlaufenden Montagering 72 aus, der zum Motorgehäuse 40 hin eine radial verlaufende innere Montagefläche 72.2 und von dem Motorgehäuse 40 abgewandt eine radial verlaufende äußere Montagefläche 72.1 aufweist. Nach außen schließt der umlaufende Montagering 72 mit dem Montagebereich 42 des Motorgehäuses 40 ab. Der Formadapter 70 ist mit den Zylinderschrauben 74 derart an das Motorgehäuse 40 geschraubt, dass die innere Montagefläche 72.2 des Montagerings 72 flächig an der Adapterauflage 42.1 des Montagebereichs 42 anliegt. In die innere Montagefläche 72.2 ist eine umlaufende Nut eingearbeitet, in welcher ein dritter Dichtring 132 eingesetzt ist. Beim Anschrauben des Formadapters 70 legt sich der dritte Dichtring 132 an die Adapterauflage 42.1 an und dichtet so den inneren Bereich des Motorgehäuses 40 sowie den abgedichteten Raum 67 zwischen der Motorwelle 50 und dem Außenrohr 60 ab. Die äußere Montagefläche 72.1 dient der Montage der Antriebseinheit an den Rumpf 11 der Schwimm- und Tauchhilfe 10. Zum Motorgehäuse 40 hin weist der Formadapter 70 einen an den Montagering 72 anschließenden Klemmbereich 73 auf. Der Klemmbereich 73 greift in den von dem Montagebereich 42 des Motorgehäuses 40 gebildeten Innenraum ein und liegt mit seiner äußeren Oberfläche umlaufend an dem Montagebereich 42 an. Zwischen dem Klemmbereich 73 und dem Montagebereich 42 ist ein vierter Dichtring 133 in einer den Klemmbereich 73 außen umlaufenden Nut als weitere, in Reihe zu dem dritten Dichtring 132 angeordnete Abdichtung vorgesehen. Der Klemmbereich 73 weist einen geringfügig kleineren Innendurchmesser als die Rohraufnahme 71 auf, so dass auch der Außendurchmesser des Formadapter-Anschlussbereichs 62 des Außenrohrs 60 im Abschnitt des Klemmbereichs 73 einen Dichtungsbereich 63 mit einem kleineren Außendurchmesser aufzeigt. Zwischen dem Klemmbereich 73 und dem Dichtungsbereich 63 sind nacheinander ein erster Dichtring 130 und ein zweiter Dichtring 131 in jeweils einer den Formadapter-Anschlussbereich 62 umlaufenden Dichtringaufnahme 63.1 angeordnet, welche einen Wassereintritt zwischen dem Formadapter 70 und dem Außenrohr 60 verhindern.

Zwischen der zylindrischen Innenfläche des Lagerbereichs 43 des Motorgehäuses 40 und dem Lagersitz 82.1 der vorderen Wuchtscheibe 82 ist ein zweireihiges Rillenkugellager 80 angeordnet. Dabei liegt der Außenring des zweireihigen Rillenkugellagers 80 an dem Lagerbereich 43 und der Innenring an dem Lagersitz 82.1 an. Zum Innenraum des Motorgehäuses 40 liegt der Außenring des zweireihigen Rillenkugellagers 80 an dem Vorsprung 43.1 des Lagerbereichs 43 an, während der Innenring an einem Absatz der vorderen Wuchtscheibe 82 anliegt. Auf der gegenüberliegenden Seite ist der Innenring durch einen ersten Sicherungsring 81 gehalten, der in einer umlaufenden Nut im Lagersitz 82.1 festgelegt ist. Der Außenring des zweireihigen Rillenkugellagers 80 stößt auf dieser Seite gegen eine Abschlussfläche des Klemmbereichs 73 des Formadapters 70. Das zweireihige Rillenkugellager 80 ist somit entsprechend einem Festlager beidseitig in axialer Richtung gehalten.

An dem dem Formadapter 70 abgewandten Ende weist das Motorgehäuse 40 den Anschlussbereich 41 auf. Der Anschlussbereich 41 ist durch drei umlaufende Stege 41.1, 41.2, 41.3 gebildet, welche drei Rillen 41.4, 41.5, 41.6 voneinander trennen. In axialer Ausrichtung ist das Motorgehäuse 40 auf der dem Formadapter 70 abgewandten Stirnfläche durch eine Gehäuseöffnung 44 geöffnet.

Der äußere Bereich der Gehäuseöffnung 44 ist durch einen scheibenförmigen Aufnahmeschild 90 abgedeckt. Der Aufnahmeschild 90 ist radial ausgerichtet und schließt außen mit dem Motorgehäuse 40 ab. Der Aufnahmeschild 90 ist auf seiner dem Innenraum des Motorgehäuses 40 zugewandten Seite mit der Vergussmasse, die den Stator 31 trägt, fixiert. Radial nach innen gerichtet bildet der Aufnahmeschild 90 eine kreisförmige Aufnahme für einen Lagerschild 91. Der Lagerschild 91 ist ebenfalls kreisförmig und in axialer Richtung stufenförmig ins Innere des Motorgehäuses 40 verlaufend ausgebildet. Er bildet in seinem inneren Bereich einen axial ausgerichteten Lageransatz 91.1 aus, welcher radial beabstandet dem Lagerstutzen 83.3 der hinteren Wuchtscheibe 83 gegenübersteht. Zwischen dem Lageransatz 91.1 und dem Lagerstutzen 83.3 ist ein Wärmeausgleichslager 84 als einreihiges Rillenkugellager vorgesehen. Der Innenring des Wärmeausgleichslagers 84 ist auf der einen Seite durch die hintere Wuchtscheibe 83 und auf der gegenüberliegenden Seite durch einen zweiten Sicherungsring 84.1 axial gehalten. Dazu ist der zweite Sicherungsring 84.1 in eine umlaufende Nut des Lagerstutzens 83.3 eingeklemmt.

Ein Scheibenmagnet 93.1 ist in eine axial angeordnete Aufnahme des Lagerstutzens 83.3 der hinteren Wuchtscheibe 83 eingelassen.

Auf der Seite der Anschlusskabel 33 ist das Motorgehäuse 40 von einer Abdeckung 92 abgeschlossen. Die Abdeckung 92 liegt an dem Lagerschild 91 an und weist Durchbrüche zur Durchführung der Anschlusskabel 33 auf. An der Abdeckung 92 ist mit geeigneten Befestigungsmitteln ein Rotorlagesensor 93 angeordnet, der gegenüber dem Scheibenmagnet 93.1 positioniert ist.

Die vordere Wuchtscheibe 82 mit dem angeformten Lagersitz 82.1, der Rotor 32 sowie die hintere Wuchtscheibe 83 mit ihrem Zapfen 83.1 sind mit der aus kohlenstofffaserverstärktem Kunststoff hergestellten Motorwelle 50 verklebt. Durch die vorgesehenen Klebstoffeintiefungen 82.2, Klebefugen 54 und Kleberillen wird eine optimale Klebstoffdicke erreicht, um eine feste Verbindung zwischen den Bauteilen und der Motorwelle 50 zu erreichen, so dass auch hohe Kräfte übertragen werden können.

Die Motorwelle 50 ist im Bereich des Elektromotors 30 zweifach gelagert. Dabei ist das vordere zweireihige Rillenkugellager 80 als Festlager und das hintere Wärmeausgleichslager 84 als Loslager ausgeführt, so dass unterschiedliche Materialausdehnungen bei Temperaturwechsel ausgeglichen werden können. Ein ausreichender axialer Längenausgleich ist bei der vorgesehenen Motorwelle 50 aus CFK besonders wichtig, da kohlenstofffaserverstärkte Kunststoffe einen von Metallen abweichenden Wärmeausdehnungskoeffizienten aufweisen, der stark von der Orientierung der Kohlenstofffasern abhängt.

Die beiden Wuchtscheiben 82, 83 mit dem angeformten Lagersitz 82.1 beziehungsweise Lagerstutzen 83.3 sind aus Metall, im vorliegenden Ausführungsbeispiel aus Aluminium gefertigt. Die Innenringe des zweireihigen Rillenkugellagers 80 und des Wärmeausgleichlagers 84 liegen daher nicht unmittelbar auf dem faserverstärkten Kunststoffmaterial der Motorwelle 50, sondern auf mit der Motorwelle 50 verbundenen Kraft-Übertragungselementen aus Metall, wie sie durch den Lagersitz 82.1 und den Lagerstutzen 83.3 gebildet sind, auf. Durch diese Kraft-Übertragungselemente werden die von den Lagern auf die Motorwelle 50 übertragenen Kräfte auf eine größere Fläche verteilt, so dass der kohlenstofffaserverstärkte Kunststoff der Motorwelle 50 nicht durch eine lokal zu hohe Flächenpressung zerstört wird. Weiterhin wird ein erhöhter Abrieb der Motorwelle durch eine Relativbewegung zwischen der Motorwelle und den Innenringen vermieden. Der Lagersitz 82.1 der vorderen Wuchtscheibe 82 stellt ein Kraft-Übertragungselement dar, das umlaufend zur Motorwelle 50 angeordnet ist, während der Lagerstutzen 83.3 der hinteren Wuchtscheibe 83 ein Kraft-Übertragungselement darstellt, das als endseitige axiale Verlängerung der Motorwelle 50 ausgeführt ist. Die Motorwelle 50 kann durch Bohrungen, welche radial von außen in die Wuchtscheiben 82, 83 eingebracht werden, ausgewuchtet werden.

Der Formadapter 70 übernimmt mehrere Aufgaben. Er dient der seitlichen und axialen Festlegung des Außenrohres 60. Weiterhin dichtet er im Zusammenspiel mit den vorgesehenen Dichtringen 130, 131, 132, 133 den Innenraum des Motorgehäuses 40, den Bereich des zweireihigen Rillenkugellagers 80 sowie den abgedichteten Raum 67 zwischen dem Außenrohr 60 und der Motorwelle 50 gegenüber eindringendem Wasser ab. Die Lagerung der Motorwelle 50 in einem trockenen Bereich reduziert die Anforderungen an das verwendete zweireihige Rillenkugellager 80, da dieses nicht gesondert abgedichtet werden muss. Der Formadapter 70 stellt weiterhin die äußere Montagefläche 72.2 bereit, mit der die Antriebseinheit an den Rumpf 11 der Schwimm- und Tauchhilfe 10 montiert werden kann. Zusätzlich dient der Formadapter 70 der axialen Festlegung des zweireihigen Rillenkugellagers 80.

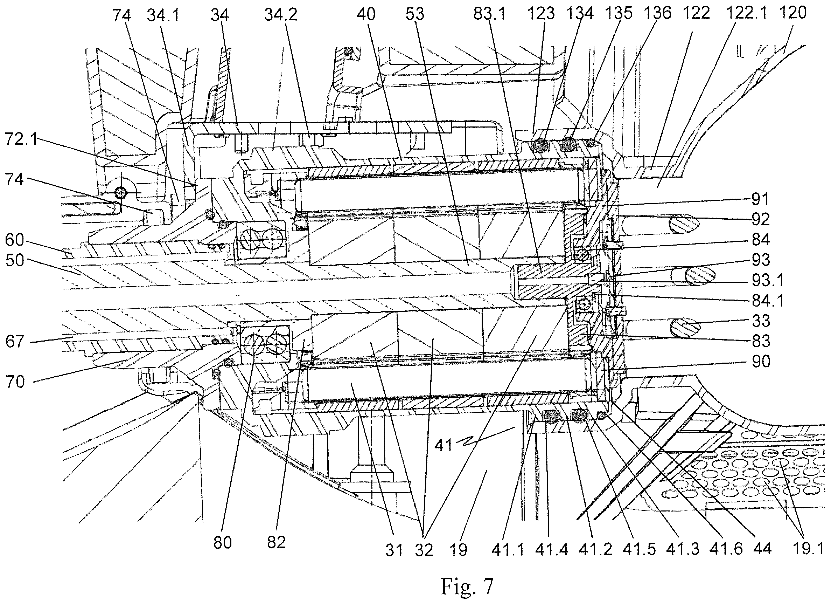

Das Motorgehäuse 40 ist aus Metall und im Wesentlichen zylindrisch ausgeführt. In seinem dem Flanschadapter 70 zugewandten Bereich bietet es die Adapterauflage 42.1 zur abgedichteten Montage des Flanschadapters 70 sowie den Lagerbereich für das zweireihige Rillenkugellager 80. Das Motorgehäuse 40 wird dabei in einem Fertigungsprozess hergestellt, so dass die genannten Funktionen kostengünstig umgesetzt werden können. Der Anschlussbereich 41 dient der wasserdichten Verbindung mit einem Elektronikgehäuse 120, wie dies zu Figur 7 beschrieben ist. Durch das Elektronikgehäuse 120 ist auch die von dem Formadapter 70 abgewandte Gehäuseöffnung 44 des Elektromotors 30 wasserdicht verschlossen, so dass der gesamte Elektromotor 30 in einen wasserdurchfluteten Raum der Schwimm- und Tauchhilfe 10 angeordnet und damit effizient gekühlt werden kann.

Der Stator 31 ist über eine Vergussmasse mit dem Motorgehäuse 30 verbunden, während der Rotor 32 fest mit der Motorwelle 50 verbunden ist. Zusammen mit der beschriebenen Lagerung der Motorwelle 50 ergibt sich so eine kompakte Bauweise für einen Elektromotor 30 mit einer hohen Antriebsleistung und einem guten, schwingungsarmen Rundlauf. Der Rundlauf wird weiterhin durch den vorgesehenen Rotorlagesensor 93 mit dem Scheibenmagnet 93.1 als Geber verbessert, indem der Rotorlagesensor 93 das sich in dem Elektromotor ausbildende Magnetfeld regelt und den Rotor 32 und den Stator 31 in eine gewünschte Zuordnung einstellt.

Der Aufnahmeschild 90 ist durch die Vergussmasse, in welcher der Stator 31 eingebettet ist, sicher festgelegt, so dass auch die nachfolgenden, mit dem Aufnahmeschild 90 mittelbar oder unmittelbar verbundenen Bauelemente positionsgenau gehalten sind. Die Anschlusskabel 33 dienen der elektrischen Verbindung des Elektromotors 30 und des Rotorlagesensors 93 mit einem in dem Elektronikgehäuse 120 gehaltenen Steuergerät.

Zur Montage der Anordnung werden zunächst die vordere Wuchtscheibe 82, der Rotor 32 und die hintere Wuchtscheibe 83, in welcher der Scheibenmagnet 93.1 eingeklebt ist, mit der Motorwelle 50 verklebt. Der Stator 31 wird zusammen mit dem Aufnahmeschild 90 mit Hilfe der Vergussmasse mit dem Motorgehäuse 40 verbunden. Der Lagerschild 91, das Wärmeausgleichslager 84, der Rotorlagesensor 93 und die Abdeckung 92 werden montiert, wobei die Anschlusskabel 33 rückseitig herausgeführt werden. Der erste und der zweite Dichtring 130, 131 werden in die Dichtringaufnahmen 63.1 des Außenrohrs 60 eingelegt und das Außenrohr 60 wird in die Rohraufnahme 71 des Formadapters 70 eingeklebt. Anschließend wird die Motorwelle 50 von der Seite des Anschlussbereichs 41 für das Elektronikgehäuse 120 in das Motorgehäuse 40 eingeführt und das zweireihige Rillenkugellager 80 auf den Lagersitz 82.1 geschoben. Nachdem das zweireihige Rillenkugellager 80 mit dem ersten Sicherungsring 81 festgelegt wurde wird das Außenrohr 60 über die Motorwelle 50 geschoben und der Formadapter 70, nachdem der dritte und der vierte Dichtringe 132, 133 eingesetzt wurden, mit Hilfe der Zylinderkopfschrauben 74 am Motorgehäuse 40 festgeschraubt. Es entsteht so eine kompakte Baueinheit aus Elektromotor 30 mit angeschlossener Motorwelle 50 und Außenrohr 60, die einfach in dem Rumpf 11 der Schwimm- und Tauchhilfe 10 zu montieren ist.

Figur 5 zeigt einen in Figur 3 gezeigten Propellerabschnitt V in einer vergrößerten Schnittdarstellung.

Die aus kohlenstofffaserverstärktem Kunststoff hergestellte Motorwelle 50 ist innerhalb des Außenrohres 60 geführt. Im Bereich ihres endseitigen zweiten Aufnahmeabschnitts 56 ist eine Wellenstumpfaufnahme 56.1 als axiale Bohrung mit einem im Vergleich zum Innendurchmesser der als Hohlwelle ausgeführten Motorwelle 50 größeren Durchmesser eingebracht. Der aus Aluminium bestehende Wellenstumpf 110 ist mit ist mit einem Befestigungsabschnitt 117 in die Wellenstumpfaufnahme 56.1 eingeführt und eingeklebt. Zur Ausbildung einer gleichmäßigen Klebstoffdicke sind in dem Befestigungsabschnitt 117 des Wellenstumpfes 110 umlaufende Klebstoffeintiefungen 118 eingearbeitet, in welchen sich der Klebstoff in einer durch die Tiefe der Klebstoffeintiefungen 118 vorgegebenen Dicke sammelt. Zur Gewichtseinsparung ist in den Befestigungsabschnitt 117 eine axiale vordere Bohrung 116 eingebracht.

Im Anschluss an den Befestigungsabschnitt 117 weist der Wellenstumpf 110 einen umlaufenden, radial ausgerichteten Bund 115 auf, der zur Motorwelle 50 hin durch einen als radial verlaufende Fläche ausgebildeten Wellenanschlag 115.2 und gegenüberliegend durch einen ebenfalls als radial verlaufende Fläche ausgebildeten Lageranschlag 115.1 begrenzt ist. Der Wellenanschlag 115.2 liegt umlaufend zu der Wellenstumpfaufnahme 56.1 an dem zweiten Aufnahmeabschnitt 56 der Motorwelle 50 an. Durch den Wellenanschlag 115.2 ist somit die Einbautiefe des Befestigungsabschnitts 117 in die Wellenstumpfaufnahme 56.1 festgelegt.

Dem Bund 115 schließt sich ein Lager- und Abdichtbereich 114 des Wellenstumpfes 110 mit einer zylindrischen Außenkontur an, der innerhalb des Außenrohres 60 angeordnet ist. Mit dem Abschluss des Außenrohres 60 geht der Wellenstumpf 110 in eine Propelleraufnahme 112 über. Von Seiten der Propelleraufnahme 112 ist eine axial verlaufende, hintere Bohrung 113 in den Wellenstumpf 110 eingebracht, die ausgehend von ihrer Öffnung ein Innengewinde 111 zur Montage des in Figur 6 gezeigten Propellers 150 aufweist.

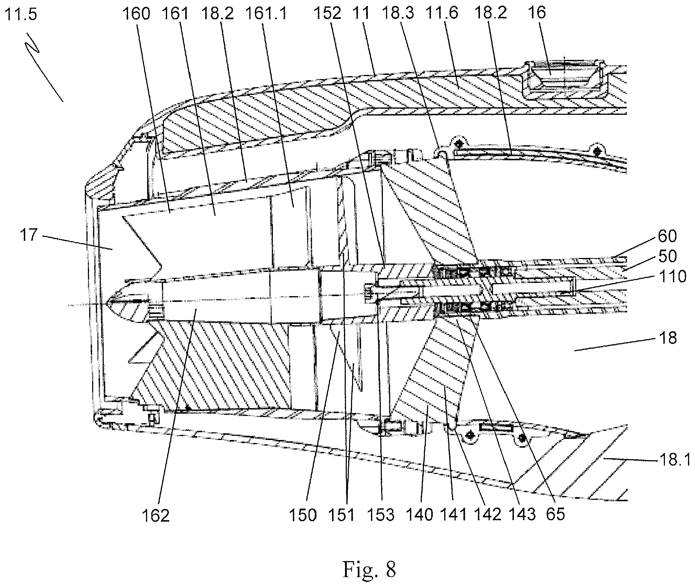

Das Außenrohr 60 umschließt die Motorwelle 50 sowie den Lager- und Abdichtbereich 114 des Wellenstumpfes 110 bis hin zu der Propelleraufnahme 112, die aus dem Außenrohr 60 ragt. Im Bereich einer Rohrverstärkung 64, welche einen Teil des Lager- und Abdichtbereichs 114 umschließt, steigt die Wandstärke des Außenrohres 60 an. Anschließend ist die Wandstärke an einem Übergang der Rohrverstärkung 64 zu einem Zentrierabschnitt 65 stufenförmig reduziert. Der stufenförmige Übergang bildet einen zum Ende des Außenrohres 60 hin ausgerichteten Anschlag 64.1. Der Zentrierabschnitt 65 dient der Aufnahme eines Zentriersterns 140, wie dies zu Figur 8 gezeigt ist. Der Zentrierstern 140 ist mit dem Zentrierabschnitt 140 verklebt. Zur Ausbildung einer geeignet dicken Klebstoffschicht sind umlaufende Klebstofffugen 66 an dem Zentrierabschnitt 140 vorgesehen. Der Zentrierstern 140 kann so bis zu dem Anschlag 64.1 auf den Zentrierabschnitt 140 aufgeschoben und mit diesem verklebt werden.

Die Motorwelle 50 ist im Lager- und Abdichtbereich 114 des Wellenstumpfes 110 gelagert. Dazu ist ein Rillenkugellager 105 zwischen dem Außenrohr 60 und dem Lager- und Abdichtbereich 114 angeordnet. Der Innenring des Rillenkugellagers 105 liegt an dem durch den Bund 115 gebildeten Lageranschlag 115.1 an und ist somit axial in Richtung zur Motorwelle 50 festgelegt. In die entgegengesetzte Richtung liegt der Außenring des Rillenkugellagers 105 an einer Wellenfeder 104 an, die gegenüberliegend durch einen vierten Sicherungsring 104.1 axial gehalten ist. Die Wellenfeder 104 ist als Flachdraht-Wellenfeder und damit platzsparend ausgeführt. Sie ermöglicht dem Rillenkugellager 105 eine axiale Bewegung, so dass unterschiedliche Wärmedehnungen zwischen der Motorwelle 50 und dem Außenrohr 60 ausgeglichen werden können. Dem vierten Sicherungsring 104.1 folgt ein zweiter Distanzring 103.2, welcher einen zweiten Radialwellendichtring 102.2 beabstandet zu dem vierten Sicherungsring 104.1 festlegt. Beabstandet durch einen ersten Distanzring 103.1 ist ein erster Radialwellendichtring 102.2 zwischen dem Außenrohr 60 und dem Lager- und Abdichtbereich 114 des Wellenstumpfes 110 angeordnet. Dem ersten Radialwellendichtring 102.2 folgen zwei benachbart angeordnete Filzringe 101.3, 101.4, welche von einem mit einem Filzringträger-Deckel 101.5 abgeschlossenen Filzringträger 101.2 derart gehalten sind, dass sie an dem Lager- und Abdichtbereich 114 anliegen. Gegenüberliegend zu dem zweiten Filzring 101.4 liegt der Filzringträger-Deckel 101.5 an dem ersten Radialwellendichtring 102.2 an und legt diesen damit axial fest. Der Filzringträger 101.2 ist zum Ende des Außenrohres 60 hin durch einen dritten Sicherungsring 101.1, welcher in einer umlaufenden Nut des Außenrohres 60 festgeklemmt ist, gehalten.

Durch das Rillenkugellager 105 ist die Motorwelle 50 an ihrem dem Propeller 150 zugewandten Ende gelagert. Zusammen mit dem in Figur 4 gezeigten zweireihigen Rillenkugellager 80 ist die Motorwelle 50 somit auf ihrem Übertragungsweg von dem Elektromotor 30 zu dem Propeller 150 jeweils endseitig gelagert. Dadurch kann ein Verbiegen der Motorwelle 50 oder ein Schwingen der Motorwelle mit dem montierten Propeller 150 sicher vermieden werden.

Durch die beiden Radialwellendichtringe 102.1, 102.2 und die Filzringe 101.3, 101.4 ist der Bereich des Rillenkugellagers 105 sowie der Raum 67 zwischen der Motorwelle 50 und dem Außenrohr 60 gegen eindringendes Wasser und eindringenden Schmutz abgedichtet.

Die propellerseitige Lagerung und Abdichtung der Motorwelle 50 erfolgt auf dem Lager- und Abdichtbereich 114 des aus Aluminium hergestellten Wellenstumpfes 110 als axialer Verlängerung der Motorwelle 50. Der Wellenstumpf stellt ein Kraft-Übertragungselement dar, mit dem die von dem Rillenkugellager 105 eingebrachten Führungskräfte auf die Motorwelle 50 übertragen werden. Die Lagerung der Motorwelle 50 und die Abdichtung des abgedichteten Raums 67 erfolgt somit nicht direkt auf der druck- und abriebempfindlichen Motorwelle 50 aus kohlestofffaserverstärktem Kunststoff, sondern auf einem entsprechend dauerbeständigen Metallbauteil.

Figur 6 zeigt die in Figur 1 gezeigte Schwimm- und Tauchhilfe 10 in einer seitlichen Schnittdarstellung. Für gleiche Bauteile sind dabei die gleichen Bezeichner verwendet.

Der Rumpf 11 der Schwimm- und Tauchhilfe 10 ist aus einem Unterteil 11.4 und einem Oberteil 11.6 gebildet. Innerhalb des Rumpfes 11 ist eine Unterwasser-Antriebs-Einheit angeordnet. Der Unterwasser-Antriebs-Einheit sind in dem vorliegenden Ausführungsbeispiel der Elektromotor 30, ein Elektronikgehäuse 120 mit einem nicht dargestellten Steuergerät, die aus kohlenfaserverstärktem Kunststoff hergestellte Motorwelle 50 mit dem umgebenden Außenrohr 50, der Zentrierstern 140 und der Propeller 150 zugeordnet.

Das Elektronikgehäuse 120 ist durch zwei Gehäusehälften 121 gebildet und kann durch Entnahme einer Gehäusehälfte 121 geöffnet werden. In der gewählten Schnittzeichnung ist lediglich die backbordseitige erste Gehäusehälfte 121 dargestellt. Eine nicht dargestellte zweite Gehäusehälfte liegt wasserdicht mit einer umlaufenden zweiten Schließfläche auf einer Schließfläche 121.1 der ersten Gehäusehälfte 121 auf. Dazu ist zwischen den beiden Schließflächen 121.1 eine nicht dargestellte Dichtung vorgesehen. Dem Elektronikgehäuse 120 ist über einen Öffnungsabschnitt 122, der eine Öffnung 122.1 des Elektronikgehäuses 120 umschließt, ein die Öffnung 122.1 nachfolgend umschließender Abdichtabschnitt 123 zugeordnet, wie dies näher in Figur 7, welche den mit VII bezeichneten Ausschnitt vergrößert darstellt, gezeigt ist. Das Elektronikgehäuse 120 wechselt zum Abdichtabschnitt 123 hin von einer flachen zu einer zylindrischen Bauform. Mit diesem zylindrisch geformten Abdichtabschnitt 123 ist das Elektronikgehäuse 120 auf den endseitig an dem ebenfalls zylindrischen Motorgehäuse 30 vorgesehenen Anschlussbereich 41 aufgesteckt. Dadurch ist das Elektronikgehäuse 120 wasserdicht mit dem Motorgehäuse 30 verbunden.

Das Elektronikgehäuse 120 ist mit Hilfe eines Montagewinkels 124 und zugehörigen Befestigungselementen 124.1 in dem Flutungsraum 19 gehalten. Der Flutungsraum 19 weist Flutungsöffnungen 19.1 auf, durch die Wasser in den Flutungsraum 19 einfließen kann. Auch der Elektromotor 30 ist innerhalb des Flutungsraums 19 angeordnet. Der Elektromotor 30 ist an dem Rumpf 11 befestigt.

Die Motorwelle 50 ist innerhalb des Außenrohres 60 von dem Elektromotor 30 in den Strömungskanal 18 der Schwimm- und Tauchhilfe 10 geführt. Der Strömungskanal 18 erstreckt sich von einer Einströmöffnung 18.4 an der Unterseite der Schwimm- und Tauchhilfe 10 bis zum Strahlaustritt 17 an deren Heck 11.5. Er kann einstückig in dem Rumpf 11 ausgeformt sein. Im vorliegenden Ausführungsbeispiel wir der Strömungskanal 18 von einer Oberschale und einer Unterschale gebildet, die mittels geeigneter Befestigungsmittel miteinander verbunden sind. Im Bereich der Einströmöffnung 18.4 ist ein Leitelement 18.1 vorgesehen, an dem das Wasser vorbeiströmt und das eine untere Auflage der Schwimm- und Tauchhilfe 10 bildet.

Das Außenrohr 60 ist endseitig mit Hilfe des aus Kunststoff gefertigten Zentriersterns 140 innerhalb des Strömungskanals 18 gehalten. Der Propeller 150 ist auf dem Wellenstumpf 110 montiert, wie dies deutlicher in Figur 8, welche den mit VIII bezeichneten Ausschnitt vergrößert darstellt, gezeigt ist. Im Anschluss ist der Stator 160 in dem Strömungskanal 18 befestigt.

Durch den abgedichteten, steckbaren Verbund des Elektronikgehäuses 120 mit dem Motorgehäuse 30, dem abgedichteten Anschluss des Außenrohres 60 an dem Motorgehäuse 30, wie dies zu Figur 4 beschrieben ist, sowie die propellerseitige Abdichtung zwischen dem Außenrohr 60 und der Motorwelle 50, wie dies in Figur 5 gezeigt ist, entsteht eine vollständig eingekapselte Unterwasser-Antriebs-Einheit. Diese kann in mit Wasser flutbare Bereiche innerhalb des Rumpfes 10 der Schwimm- und Tauchhilfe 10 angeordnet werden. Im vorliegenden Ausführungsbeispiel sind der Elektromotor 30 und die in dem Elektronikgehäuse 120 angeordnete Steuerungseinheit in dem Flutungsraum 19 angeordnet, während das Außenrohr 60 mit der Motorwelle 50 in dem Strömungskanal 18 angeordnet ist. Der Flutungsraum 19 wird beim Eintauchen der Schwimm- und Tauchhilfe 10 durch die Flutungsöffnungen 19.1 und die Wassereintritts- und austrittsöffnungen 15.2, 15.3 mit Wasser geflutet, wobei die verdrängte Luft über die Entlüftungsöffnungen 15.1 entweicht, wie dies in Figur 1 gezeigt ist. Bewegt sich die Schwimm- und Tauchhilfe 10 durch das Wasser, entsteht eine Strömung innerhalb des Flutungsraums 19, wobei das Wasser in die am Bug 11.1 befindlichen Wassereintrittsöffnungen 15.2 einströmt und durch die am Heck 11.5 angeordneten Wasseraustrittsöffnungen 15.3 wieder ausströmt. Der Elektromotor 30 und das Steuergerät sind so durch das vorbeiströmende Wasser effizient gekühlt. Verlustwärme kann schnell abgeführt werden, so dass ein Elektromotor 30 und ein zugehöriges Steuergerät mit einer sehr hohen Leistung installiert werden können.

Der Elektromotor 30 treibt über die Motorwelle 50 den Propeller 150 an. Dieser erzeugt einen Wasserstrom innerhalb des Strömungskanals 18 von der Einströmöffnung 18.4 zu dem Strahlaustritt 17, wodurch die Schwimm- und Tauchhilfe 10 angetrieben wird. Der Zentrierstern 140 fixiert die Position des Außenrohres 60 endseitig, so dass sich das Außenrohr 60 und die darin gelagerte Motorwelle 50 auch bei hohen Strömungsgeschwindigkeiten des in dem Strömungskanal 18 fließenden Wassers nicht verbiegt oder schwingt. Es wird so eine Unterwasser-Antriebs-Einheit erhalten, welche eine hohe Laufruhe aufweist.

Figur 7 zeigt einen in Figur 6 gezeigten Ausschnitt VII der Schwimm- und Tauchhilfe 10 im Bereich des Elektromotors 30.

Das Elektronikgehäuse 120 ist mit seinem Abdichtabschnitt 123 auf den Anschlussbereich 41 des Motorgehäuses 40 aufgesteckt. In den Rillen 41.4, 41.5, 41.6 des Anschlussbereichs 41 ist jeweils ein Dichtring 134, 135, 136 gehalten. Die Rillen 41.4, 41.5, 41.6 und damit die Dichtringe 134, 135, 136 sind umlaufend zum Motorgehäuse 40 und quer zur Aufsteckrichtung des Elektronikgehäuses 120 ausgerichtet. Der Abdichtabschnitt 123 des Elektronikgehäuses 120 ist so dimensioniert, dass er das Motorgehäuse 40 im Anschlussbereich 41 derart umgreift, dass die Dichtringe 134, 135, 136 zwischen den Rillen 41.4, 41.5, 41.6 und dem Abdichtabschnitt 123 eingeklemmt sind und somit die Innenbereiche des Elektronikgehäuses 120 und des Motorgehäuses 40 gegenüber dem umgebenden Flutungsraum 19 abdichten. Der dem Formadapter 70 abgewandte axiale Abschluss des Motorgehäuses 40 mit den Durchlässen für die Anschlusskabel 33 kann so offen und wasserdurchlässig ausgeführt werden. Die steckbare Verbindung zwischen dem Motorgehäuse 40 und dem Elektronikgehäuse 120 ermöglicht eine einfache und schnelle Montage sowie einen einfachen Zugang im Servicefall. Zur Montage werden zunächst die Dichtringe 134, 135, 136 in die Rillen 41.4, 41.5, 41.6 eingelegt. Anschließend werden die Anschlusskabel 33 mit dem Elektromotor 30 und dem Steuergerät verbunden. Danach werden die Gehäusehälften 121 des Elektronikgehäuses 120 geschlossen und das Elektronikgehäuse 120 wird mit seinem Abdichtabschnitt 123 auf den Anschlussbereich 41 geschoben.

Der Elektromotor 40 ist über einen Montagewinkel 34 mit dem Rumpf 11 der Schwimm- und Tauchhilfe 10 verbunden. Dazu ist der Montagewinkel 34 mit einem Schenkel mit geeigneten Befestigungselementen 34.2 an den Rumpf 11 montiert. Ein abgewinkelter Schenkel 34.1 weist einen Durchbruch auf, durch den der Formadapter 70 geführt ist. Der Formadapter 70 liegt mit seiner äußeren Montagefläche 72.1 umlaufend am Rand des Durchbruchs des abgewinkelten Schenkels 34.1 an. Umlaufend zu dem Durchbruch weist der abgewinkelte Schenkel 34.1 Bohrungen auf, durch welche die Zylinderkopfschrauben 74 geführt sind. Die Zylinderkopfschrauben 74 verbinden somit den Montagewinkel 34, den Formadapter 70 und das Motorgehäuse 40. An einer Position am Umfang des Durchbruchs ist keine der ansonsten rotationssymmetrisch angeordneten Schraubverbindungen vorgesehen. Dadurch ist die radiale Montageposition des Elektromotors 30 eindeutig festgelegt.

Figur 8 zeigt einen in Figur 6 gezeigten Ausschnitt VIII der Schwimm- und Tauchhilfe 10 im Bereich ihres Hecks 11.5 im montierten Zustand.

Der Strömungskanal 18 ist durch eine Strömungskanalwandung 18.2, welche sich in eine Ober- und eine Unterschale aufteilt, umschlossen. Der Stator 140 ist mit einer Montagehülse 143 auf den Zentrierabschnitt 65 des Außenrohres 60 bis zu dem in Figur 5 gezeigten Anschlag 64.1 aufgeschoben und mit dem Zentrierabschnitt 65 verklebt. An der Montagehülse 143 angeformte Zentrierflügel 141 sind zur Strömungskanalwandung 18.2 geführt und an dieser festgelegt. Die Zentrierflügel 141 weisen an ihrem äußeren Ende jeweils eine Rastnase 142 auf, welche in entsprechende Rastaufnahmen 18.3 in der Strömungskanalwandung 18.2 eingreifen. Der Zentrierstern 140 hält somit das Außenrohr 60 und damit die Motorwelle 40 in ihrer Position innerhalb des Strömungskanals 18. Dabei sind die Zentrierflügel 141 in Strömungsrichtung des Wassers derart geformt, dass sie einen möglichst geringen Strömungswiderstand aufweisen.

Der Propeller 150 ist aus einem Basiskörper 152 und daran angeformten Propellerflügeln 151 gebildet. Der Propeller 150 ist mit dem Basiskörper 152 auf die in Figur 5 gezeigte Propelleraufnahme 112 des Wellenstumpfes 110 aufgesteckt und mit dieser durch eine Montageschraube 153 verbunden. Dazu ist die Montageschraube 153 durch eine axial verlaufende Bohrung des Basiskörpers 152 geführt und in die mit dem Innengewinde 111 versehene hintere Bohrung 113 des Wellenstumpfes 110 eingeschraubt. Der Propeller 150 ist somit fest, jedoch leicht montierbar mit der Motorwelle verbunden. Durch die Lagerung des Außenrohres 60 durch den Zentrierstern 140 hält der Propeller 150 seine exakte Position in dem Strömungskanal 18 auch bei starker seitlicher Belastung durch vorbeiströmendes Wasser.

Im Anschluss an den Propeller 150 ist der Stator 160 mit Statorflügeln 161 nicht drehbar an der Strömungskanalwandung 18.2 festgelegt. Die Statorflügel 161 sind an einen zentralen Träger 162 angeformt, der in axialer Verlängerung des Basiskörpers 152 des Propellers 150 und damit strömungstechnisch günstig angeordnet ist. Die Statorflügel 161 weisen zum Propeller 150 hin abgewinkelte Bereiche 161.1 auf. Diese sind so ausgerichtet, dass sie den durch den Propeller 150 bewirkten Drall des ausgestoßenen Wassers geraderichten, so dass die Rotationsenergie des Wassers in eine geradlinige Bewegungsenergie umgewandelt und damit dem Antrieb der Schwimm- und Tauchhilfe 10 zugeführt wird.

## Patentansprüche

1. Schwimm- und Tauchhilfe (10) mit einem Elektromotor, mit einem Rotor (32), und einer Motorwelle (50) zur Übertragung einer Antriebskraft von dem Motor zu einem Propeller (150) der Schwimm- und Tauchhilfe (10), **dadurch gekennzeichnet,**
**dass** die Motorwelle (50) aus einem kohlenstofffaserverstärkten Kunststoff gebildet ist und dass der Rotor (32) des Elektromotors (30) mit der Motorwelle (50) verklebt ist.

2. Schwimm- und Tauchhilfe (10) nach Anspruch 1,
**dadurch gekennzeichnet,**
**dass** die Motorwelle (50) als Hohlwelle ausgeführt ist.

3. Schwimm- und Tauchhilfe (10) nach Anspruch 1 oder 2,
**dadurch gekennzeichnet,**
**dass** die Motorwelle (50) in radialer Abfolge zumindest zwei Schichten aus kohlenstofffaserverstärktem Kunststoff aufweist und/oder dass die Kohlenstofffasern einer der Schichten, insbesondere der weiter außen liegenden Schicht, im Wesentlichen in Richtung der Längserstreckung der Motorwelle (50) ausgerichtet sind, und/oder dass die Kohlenstofffasern einer der Schichten, insbesondere der weiter außen liegenden Schicht, im Wesentlichen quer zur Richtung der Längserstreckung der Motorwelle (50) ausgerichtet sind.

4. Schwimm- und Tauchhilfe (10) nach einem der Ansprüche 1 bis 3,
**dadurch gekennzeichnet,**
**dass** auf zumindest einem Teil der Oberfläche der Motorwelle (50) eine Kunststoffschicht ohne Kohlenstofffaseranteil angeordnet ist.

5. Schwimm- und Tauchhilfe (10) nach einem der Ansprüche 1 bis 4,
**dadurch gekennzeichnet,**
**dass** zumindest ein Abschnitt der Motorwelle (50) eine durch ein Drehverfahren oder ein Schleifverfahren oder ein Polierverfahren hergestellte Oberfläche aufweist.

6. Schwimm- und Tauchhilfe (10) nach einem der Ansprüche 1 bis 5,
**dadurch gekennzeichnet,**
**dass** die Motorwelle (50) zumindest einen Fügebereich aufweist und dass in dem Fügebereich Klebefugen (54) in Form von in die Oberfläche der Motorwelle (50) eingebrachten Eintiefungen vorgesehen sind.

7. Schwimm- und Tauchhilfe (10) nach einem der Ansprüche 1 bis 6,
**dadurch gekennzeichnet,**
**dass** die Motorwelle (50) zumindest zwei Lagerbereiche (52, 114) aufweist und/oder dass die Lagerbereiche (52, 114) in einem dem Motor zugewandten Endbereich und einem dem Propeller (150) zugewandten Endbereich der Motorwelle (50) angeordnet sind.

8. Schwimm- und Tauchhilfe (10) nach Anspruch 7,
**dadurch gekennzeichnet,**
**dass** zumindest ein Lagerbereich (52, 114) im Bereich der aus kohlenstofffaserverstärktem Kunststoff bestehenden Längserstreckung der Motorwelle (50) angeordnet ist und/oder dass zumindest ein Lagerbereich (52, 114) an einer endseitig an die Motorwelle (50) angebrachten Verlängerung angeordnet ist.

9. Schwimm- und Tauchhilfe (10) nach einem der Ansprüche 1 bis 8,
**dadurch gekennzeichnet,**
**dass** in Bereichen, in denen äußere Kräfte auf die Motorwelle (50) übertragen werden, Kraft-Übertragungselemente aus Metall angeordnet sind und/oder dass die Kraft-Übertragungselemente mit der Motorwelle (50) verbunden sind, insbesondere dass die Kraft-Übertragungselemente mit der Motorwelle (50) verklebt sind.

10. Schwimm- und Tauchhilfe (10) nach Anspruch 9,
**dadurch gekennzeichnet,**
**dass** in zumindest einem Lagerbereich (52) der Motorwelle (50), in dem die Motorwelle (50) um ihre Mittellängsachse drehbar lagerbar ist, umlaufend zu der Motorwelle (50) ein Kraft-Übertragungselement aus Metall angeordnet ist und/oder dass das Kraft-Übertragungselement mit der Motorwelle (50) verbunden ist, insbesondere dass das Kraft-Übertragungselement mit der Motorwelle (50) verklebt ist.

11. Schwimm- und Tauchhilfe (10) nach Anspruch 9 oder 10,
**dadurch gekennzeichnet,**
**dass** die Motorwelle (50) ein Kraft-Übertragungselement zur Aufnahme des Propellers (150) aufweist und/oder dass das Kraft-Übertragungselement zur Aufnahme des Propellers (150) endseitig an die Motorwelle (50) angebracht ist.

12. Schwimm- und Tauchhilfe (10) nach einem der Ansprüche 8 bis 10,
**dadurch gekennzeichnet,**
**dass** ein Wellenstumpf (110) als Kraft-Übertragungselement mit einem Befestigungsabschnitt (117) in einer endseitig und axial verlaufend in die Motorwelle (50) eingebrachten Wellenstumpfaufnahme (56.1) festgelegt ist und dass der Wellenstumpf (110) einen Befestigungsabschnitt zur Befestigung des Propellers (150) aufweist und/oder dass der Wellenstumpf (110) einen Lager- und Abdichtbereich (114) zur Lagerung der Motorwelle (50) und/oder zur Abdichtung aufweist.

13. Schwimm- und Tauchhilfe (10) nach einem der Ansprüche 1 bis 12,
**dadurch gekennzeichnet,**
**dass** zumindest eine Wuchtscheibe (82, 83) aus Metall mit einer axialen Bohrung auf die Motorwelle (50) aufgesteckt und mit dieser verbunden, insbesondere verklebt, ist.

14. Schwimm- und Tauchhilfe (10) nach Anspruch 13,
**dadurch gekennzeichnet,**
**dass** an der Wuchtscheibe (82, 83) ein Lagersitz (82.1) angeformt ist.

15. Schwimm- und Tauchhilfe (10) nach einem der Ansprüche 1 bis 14,
**dadurch gekennzeichnet,**
**dass** an einem äußeren Ende der Motorwelle (50) oder an einem äußeren Ende einer Verlängerung der Motorwelle (50) ein Scheibenmagnet (93.1) derart angebracht ist, dass seine Mittellängsachse auf der Mittellängsachse der Motorwelle (50) liegt.

## Claims

1. A swimming and diving aid (10), having an electric motor, having a rotor (32), and a motor shaft (50) for transmitting a driving force from the motor to a propeller (150) of the swimming and diving aid (10),
**characterised in that**
the motor shaft (50) is formed of a carbon-fibre-reinforced plastic and that the rotor (32) of the electric motor (30) is adhesively bonded to the motor shaft (50).

2. The swimming and diving aid (10) according to claim 1,
**characterised in that**
that the motor shaft (50) is designed as a hollow shaft.

3. The swimming and diving aid (10) according to claim 1 or 2,
**characterised in that**
the motor shaft (50) comprises at least two layers of carbon-fibre-reinforced plastic in radial succession and/or **in that** the carbon fibres of one of the layers, in particular the layer disposed further outwards, are oriented substantially in the direction of the longitudinal extension of the motor shaft (50), and/or **in that** the carbon fibres of one of the layers, in particular of the layer disposed further outside, are oriented substantially transverse to the direction of the longitudinal extension of the motor shaft (50).

4. The swimming and diving aid (10) according to any one of claims 1 through 3,
**characterised in that**
**in that** a plastic layer without a carbon fibre portion is arranged on at least part of the surface of the motor shaft (50).

5. The swimming and diving aid (10) according to any one of claims 1 through 4,
**characterised in that**
at least a section of the motor shaft (50) comprises a surface produced by a turning method or a grinding method or a polishing method.

6. The swimming and diving aid (10) according to any one of claims 1 through 5,
**characterised in that**
the motor shaft (50) comprises at least one joining region and **in that** adhesive joints (54) are provided in the joining region in the form of recesses introduced into the surface of the motor shaft (50).

7. The swimming and diving aid (10) according to any one of claims 1 through 6,
**characterised in that**
the motor shaft (50) comprises at least two bearing regions (52, 114) and/or that the bearing regions (52, 114) are arranged in an end region facing the motor and an end region of the motor shaft (50) facing the propeller (150).

8. The swimming and diving aid (10) according to claim 7,
**characterised in that**
at least one bearing region (52, 114) is arranged in the region of the longitudinal extension of the motor shaft (50) consisting of carbon-fibre-reinforced plastic and/or **in that** at least one bearing region (52, 114) is arranged on an extension attached to the end side of the motor shaft (50).

9. The swimming and diving aid (10) according to any one of claims 1 through 8,
**characterised in that**
force transmission elements made of metal are arranged in regions in which external forces are transmitted to the motor shaft (50), and/or **in that** the force transmission elements are connected to the motor shaft (50), in particular **in that** the force transmission elements are adhesively bonded to the motor shaft (50).

10. The swimming and diving aid (10) according to claim 9,
**characterised in that**
in at least one bearing region (52) of the motor shaft (50), in which the motor shaft (50) is rotatably mountable about the central longitudinal axis thereof, a force transmission element made of metal is arranged circumferentially with respect to the motor shaft (50) and/or **in that** the force transmission element is connected to the motor shaft (50), in particular **in that** the force transmission element is adhesively bonded to the motor shaft (50).

11. The swimming and diving aid (10) according to claim 9 or 10,
**characterised in that**
the motor shaft (50) comprises a force transmission element for receiving the propeller (150) and/or that the force transmission element for receiving the propeller (150) is attached to the end side of the motor shaft (50).

12. The swimming and diving aid (10) according to any one of claims 8 through 10,
**characterised in that**
a stub shaft (110) as a force transmission element is affixed to an attachment section (117) in a stub shaft receptacle (56.1) inserted at the end and axially into the motor shaft (50), and **in that** the stub shaft (110) comprises an attachment section for attaching the propeller (150) and/or that the stub shaft (110) comprises a bearing and sealing region (114) for mounting the motor shaft (50) and/or for sealing.

13. The swimming and diving aid (10) according to any one of claims 1 through 12,
**characterised in that**
at least one balancing disc (82, 83) made of metal is plugged by means of an axial bore onto the motor shaft (50) and connected, in particular adhesively bonded, thereto.

14. The swimming and diving aid (10) according to claim 13,
**characterised in that**
a bearing seat (82.1) is integrally formed on the balancing disc (82, 83).

15. The swimming and diving aid (10) according to any one of claims 1 through 14,
**characterised in that**
a disc magnet (93.1) is attached to an outer end of the motor shaft (50) or to an outer end of an extension of the motor shaft (50) such that the central longitudinal axis thereof lies on the central longitudinal axis of the motor shaft (50).

## Revendications

1. Aide à la nage et à la plongée (10) comprenant un moteur électrique, un rotor (32) et un arbre de moteur (50) destiné à transmettre une force d'entraînement du moteur à une hélice (150) de l'aide à la nage et à la plongée (10),
**caractérisée en ce que**
l'arbre de moteur (50) est formé à partir d'une matière plastique renforcée par des fibres de carbone
et le rotor (32) du moteur électrique (30) est collé à l'arbre de moteur (50).

2. Aide à la nage et à la plongée (10) selon la revendication 1,
**caractérisée en ce que**
l'arbre de moteur (50) est conçu comme un arbre creux.

3. Aide à la nage et à la plongée (10) selon la revendication 1 ou 2,
**caractérisée en ce que**
l'arbre de moteur (50) comporte au moins deux couches de matière plastique renforcée par des fibres de carbone suivant une séquence radiale et/ou **en ce que** les fibres de carbone de l'une des couches, en particulier de la couche la plus extérieure, sont alignées sensiblement dans la direction de l'extension longitudinale de l'arbre de moteur (50) et/ou **en ce que** les fibres de carbone de l'une des couches, en particulier de la couche la plus extérieure, sont alignées sensiblement transversalement à la direction de l'extension longitudinale de l'arbre de moteur (50).

4. Aide à la nage et à la plongée (10) selon l'une quelconque des revendications 1 à 3,
**caractérisée en ce qu'**
une couche de matière plastique sans proportion de fibres de carbone est disposée sur au moins une partie de la surface de l'arbre de moteur (50).

5. Aide à la nage et à la plongée (10) selon l'une quelconque des revendications 1 à 4,
**caractérisée en ce qu'**
au moins une partie de l'arbre de moteur (50) comporte une surface obtenue par un procédé de tournage ou un procédé de rectification ou un procédé de polissage.

6. Aide à la nage et à la plongée (10) selon l'une quelconque des revendications 1 à 5,
**caractérisée en ce que**
l'arbre de moteur (50) comporte au moins une zone de jonction et **en ce que**, dans la zone de jonction, des joints adhésifs (54) sont prévus sous la forme d'évidements ménagés dans la surface de l'arbre de moteur (50).

7. Aide à la nage et à la plongée (10) selon l'une quelconque des revendications 1 à 6,
**caractérisée en ce que**
l'arbre de moteur (50) comporte au moins deux zones formant paliers (52, 114) et/ou **en ce que** les zones formant paliers (52, 114) sont disposées dans une zone d'extrémité tournée vers le moteur et une zone d'extrémité de l'arbre de moteur (50) tournée vers l'hélice (150).

8. Aide à la nage et à la plongée (10) selon la revendication 7,
**caractérisée en ce qu'**
au moins une zone formant palier (52, 114) est disposée dans la zone de l'extension longitudinale, en matière plastique renforcée par des fibres de carbone, de l'arbre de moteur (50) et/ou **en ce qu'**au moins une zone formant palier (52, 114) est disposée au niveau d'un prolongement monté sur l'arbre de moteur (50) du côté extrémité.

9. Aide à la nage et à la plongée (10) selon l'une quelconque des revendications 1 à 8,
**caractérisée en ce que**
des éléments de transmission de force en métal sont disposés dans des zones dans lesquelles des forces extérieures sont transmises à l'arbre de moteur (50) et/ou **en ce que** les éléments de transmission de force sont reliés à l'arbre de moteur (50), en particulier **en ce que** les éléments de transmission de force sont collés à l'arbre de moteur (50).

10. Aide à la nage et à la plongée (10) selon la revendication 9,
**caractérisée en ce que**
dans au moins une zone formant palier (52) de l'arbre de moteur (50), dans laquelle l'arbre de moteur (50) peut être logé à rotation sur son axe longitudinal central, un élément de transmission de force en métal est disposé de manière rotative par rapport à l'arbre de moteur (50) et/ou l'élément de transmission de force est relié à l'arbre de moteur (50), en particulier **en ce que** l'élément de transmission de force est collé à l'arbre de moteur (50).

11. Aide à la nage et à la plongée (10) selon la revendication 9 ou 10,
**caractérisée en ce que**
l'arbre de moteur (50) comporte un élément de transmission de force destiné à recevoir l'hélice (150) et/ou **en ce que** l'élément de transmission de force destiné à recevoir l'hélice (150) est monté sur l'arbre de moteur (50) du côté extrémité.

12. Aide à la nage et à la plongée (10) selon l'une quelconque des revendications 8 à 10,
**caractérisée en ce qu'**
un bout d'arbre (110) est fixé en tant qu'élément de transmission de force, par une partie de fixation (117), dans un logement de bout d'arbre (56.1) ménagé dans l'arbre de moteur (50) du côté extrémité et de manière à s'étendre axialement, et **en ce que** le bout d'arbre (110) comporte une partie de fixation destinée à fixer l'hélice (150) et/ou **en ce que** le bout d'arbre (110) comporte une zone d'étanchéité formant palier (114) destinée au montage de l'arbre de moteur (50) et/ou à l'étanchéité.

13. Aide à la nage et à la plongée (10) selon l'une quelconque des revendications 1 à 12,
**caractérisée en ce qu'**
au moins un disque d'équilibrage (82, 83) en métal pourvu d'un alésage axial est enfiché sur l'arbre de moteur (50) et est relié, en particulier collé, à celui-ci.

14. Aide à la nage et à la plongée (10) selon la revendication 13,
**caractérisée en ce qu'**
un siège de palier (82.1) est formé au niveau du disque d'équilibrage (82, 83).

15. Aide à la nage et à la plongée (10) selon l'une quelconque des revendications 1 à 14,
**caractérisée en ce qu'**
un disque magnétique (93.1) est monté à une extrémité extérieure de l'arbre de moteur (50) ou à une extrémité extérieure d'un prolongement de l'arbre de moteur (50) de sorte que son axe longitudinal central se situe sur l'axe longitudinal central de l'arbre de moteur (50).
